# EUROPEAN PATENT SPECIFICATION

(11) **EP 3 191 864 B1**
(45) Date of publication and mention of the grant of the patent: **30.10.2019**
(21) Application number: 15762612.8
(22) Date of filing: 10.09.2015
(51) Int. Cl.: G01S 7/41, G01S 7/40, G01S 13/04, G01S 13/86, G01S 13/88

(54) **RADAR SENSING OF VEHICLE OCCUPANCY**
RADARERFASSUNG EINER FAHRZEUGBELEGUNG
DÉTECTION RADAR DE L'OCCUPATION DE VÉHICULE

(30) Priority: 10.09.2014 LU 92541
(43) Date of publication of application: 19.07.2017
(73) Proprietor: IEE International Electronics & Engineering S.A., 6468 Echternach (LU)
(72) Inventor: CARENZA, Giuseppe, 7782 Bissen (LU); LANDWEHR, Jochen, 54295 Trier (DE)
(74) Representative: Office Freylinger
(86) International application number: PCT/EP2015/070740
(87) International publication number: WO 2016/038148

(56) References cited:
- WO-A1-2013/037399
- DE-A1-102005 020 847
- DE-A1-102005 054 501
- US-A1- 2002 003 345

## Description

### Technical field

The present invention generally relates to the technical field of sensing objects internal to a vehicle, and more specifically to radar sensing for detecting occupants in a vehicle.

### Background Art

State of the art systems for occupant classification and detection are foil based systems which are integrated in every single seat (involving high integration costs). It is also known to provide for contactless sensing (e.g. of humans) within a vehicle, e.g. for occupancy detection (OD), occupancy classification (OC) or seat-belt reminder (SBR) functionality. Radar based in-vehicle systems are not established on the market due to high costs. In general, each single seat needs a separate radar sensor.

Radar technology offers some advantages in comparison to other occupancy detection and classification methods. It is a contactless and invisible measurement system which can easily be integrated behind plastic covers and textiles. Radar systems can measure the smallest motions - within the range of micrometers. Existing state of the art solutions use e.g. a conventional single frequency Doppler radar as a motion sensor. Other solutions may use FMCW radar sensing.

An example of a prior solution is disclosed in document WO 2013/037399 A1. This document discloses a system for detecting a vital-related signal pattern of a seated person in a vehicle seat. The system uses a Doppler radar to detect the motion of a passenger's chest. The radar is arranged behind the front surface of the backrest.

Since radar sensors are sensitive to the smallest motions, appropriate algorithms have to be implemented in order to correctly evaluate the radar signal and discriminate noise. In these algorithms it is for instance important to discriminate exterior and interior vehicle influences such as e.g. shaking due to wind, persons, passing traffic, etc. and/or engine vibration.

### Technical problem

It is an object of the present invention to provide an improved radar sensor for occupancy detection. This object is achieved by the invention as claimed in claim 1.

### General Description of the Invention

According to one aspect of the invention there is provided a method for sensing occupancy status within an automotive vehicle using a radar sensor system, the radar sensor system comprising an antenna system, at least one sensor and processing circuitry. The method comprises
illuminating, using the antenna system, at least one occupiable position within the vehicle with an outgoing radar signal;
receiving, using at least one sensor, at least one sensor signal reflected as a result of the outgoing radar signal,
obtaining accelerometer data value from at least one accelerometer, said accelerometer data containing information regarding vibration or motion of said automotive vehicle and supplying said accelerometer data to said processing circuitry;
operating the processing circuitry for generating, based on the at least one sensor signal and on the accelerometer data, one or more occupancy status signals, the occupancy status signal indicating a property related to said at least one occupiable position.

The above method advantageously includes accelerometer data to the classification software of the system and is therefore able to compensate for the motion or vibration of the vehicle. The information regarding vibration or motion can be taken in consideration when the classification (interior human detection) algorithm needs to classify. This information will help to filter out exterior influences that might falsify the classification (passing traffic, wind shakes, various vibrations of the engine or any exterior event leading to a vehicle movement).

If during a detection cycle of the interior radar system to determine the occupant status, objects are present in the beam of the radar and the vehicle is moved by exterior influence, like for example wind or people moving / shaking the vehicle, an occupant status could be triggered. Such a false positive classification may be avoided by obtaining, over the vehicle data bus, the state of the ACU (Airbag Control Unit) accelerometer values or the values of the system embedded accelerometers. By integrating these values into the classification, one can understand the plausibility of the radar measured signal and discriminate false positive activations. A further positive effect could be to filter out running engine vibration to render more robust the radar vehicle interior occupancy state, if classification in engine on is required.

In an embodiment of the invention, the generating one or more occupancy status signals comprises applying, based on said accelerometer data, offset removal to said sensor signal to generate a modified signal; and generating said one or more occupancy status signals based on the modified signals.

The one or more occupancy status signals may comprise an occupant detection signal, indicating whether or not an occupant is present in the occupiable position, an occupant classification signal, indicating a classification for an occupant present in the occupiable position, and/or an occupant vital signs signal, indicating the extent to which vital signs are exhibited in the occupiable position or by an occupant in the occupiable position.

In one embodiment, the one or more occupancy status signals comprise at least one of (i) an occupant detection signal, indicating whether or not an occupant is present in the occupiable position, (ii) an occupant classification signal, indicating a classification for an occupant present in the occupiable position, and (iii) an occupant vital signs signal, indicating the extent to which vital signs are exhibited in the occupiable position or by an occupant in the occupiable position.

In another aspect of the invention, a radar sensor system for sensing occupancy status within an automotive vehicle comprises
an antenna system for illuminating at least one occupiable position within the vehicle with an outgoing radar signal;
at least one sensor for receiving at least one sensor signal reflected as a result of the outgoing radar signal, and
a processing circuitry coupled to the at least one sensor, the processing circuitry being operable
for obtaining accelerometer data from at least one accelerometer, said accelerometer data containing information regarding vibration or motion of said automotive vehicle, and
for generating, based on the at least one sensor signal and on the accelerometer data, one or more occupancy status signals, the occupancy status signal indicating a property related to said at least one occupiable position.

In a possible embodiment of the radar sensor, said generating one or more occupancy status signals comprises applying, based on said accelerometer data, offset removal to said sensor signal to generate a modified signal; and generating said one or more occupancy status signals based on the modified signals.

In one embodiment the one or more occupancy status signals comprise at least one of (i) an occupant detection signal, indicating whether or not an occupant is present in the occupiable position, (ii) an occupant classification signal, indicating a classification for an occupant present in the occupiable position, and (iii) an occupant vital signs signal, indicating the extent to which vital signs are exhibited in the occupiable position or by an occupant in the occupiable position.

In possible embodiments, the at least one accelerometer is a dedicated accelerometer and forms an integral part of said radar sensor and/or an accelerometer associated to existing vehicle components, such as an airbag control unit accelerometer.

In embodiments, a general radar system is provided for in-vehicle occupant detection and classification (e.g. airbag suppression), for passenger presence detection, for passenger's vital sign monitoring and/or for seat-belt reminder functionality (SBR).

It will be noted, that the present invention applies to both conventional Doppler radars (CW-radars) and or FMCW radars.

### Brief Description of the Drawings

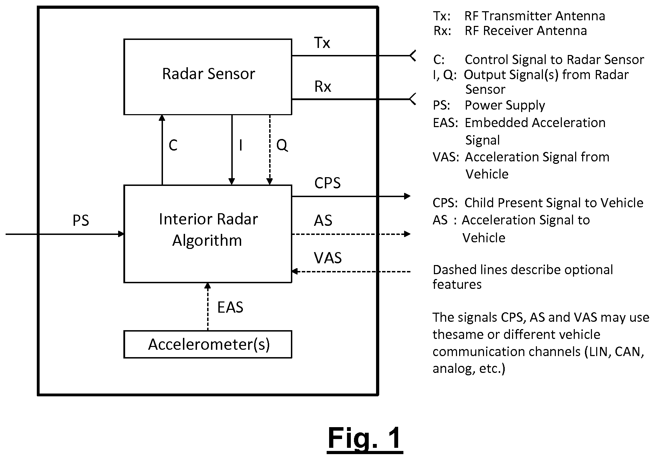

An embodiment of the invention will now be described by way of reference example to the accompanying drawing, in which FIG. 1 is a schematic diagram of a radar sensor for occupant sensing.

### Description of Preferred Embodiments

Radar sensing within a complex environment like the interior of a car cabin is very challenging and the algorithm differs much from those for exterior radar sensing.

The advantage of radar systems is that in contrast to passive camera systems the radar system operates also in the night as it illuminates actively the scene. Active camera systems need an illumination in the light spectrum which can be visible for the human eye (compare to the glooming of infrared cameras). Radar systems work in the microwave range which is completely invisible for the human eye. In addition it penetrates into materials and can transmit through. So the integration behind plastic covers and textiles as well is possible while camera based systems need an opening to look through.

In one embodiment, the radar detection system has nearly fixed and constant antenna lobes over the whole frequency range from 24.00 GHz up to 24.25 GHz; however, the invention is not restricted to this frequency range. The frequency can be lower, higher or overlapping. Furthermore the invention applies to both conventional Doppler radars (CW-radars) and or FMCW radars.

The radar sensor system for sensing occupancy status within an automotive vehicle shown in Fig. comprises an antenna system (Tx) for illuminating at least one occupiable position within the vehicle with an outgoing radar signal. At least one sensor (Radar Sensor) is receiving (via RX) at least one sensor signal reflected as a result of the outgoing radar signal. A processing circuitry (Interior Radar Algorithm) is coupled to the radar sensor.

At least one accelerometer is operatively coupled to the processing circuitry. The accelerometer may be an existing accelerometer in the car, such as an accelerometer of the airbag control unit, or a dedicated accelerometer embedded into the radar sensor. It will be noted that several (different) accelerometers may be read out by the processing circuitry.

The processing circuitry is configured and operable for obtaining accelerometer data containing information regarding vibration or motion of said automotive vehicle from the accelerometer and for generating, based on the at least one sensor signal and on the accelerometer data, one or more occupancy status signals (CPS), the occupancy status signal indicating a property related to said at least one occupiable position.

Due to the use of the accelerometer data, external influences, vibrations and vehicle motion may be filtered out and the classification of the occupancy status is improved.

## Claims

1. A method for sensing occupancy status within an automotive vehicle using a radar sensor system, the radar sensor system comprising an antenna system (Tx), at least one sensor (Radar Sensor) and processing circuitry, the method comprising
illuminating, using the antenna system (Tx), at least one occupiable position within the vehicle with an outgoing radar signal;
receiving, using at least one sensor (Radar Sensor), at least one sensor signal reflected as a result of the outgoing radar signal,
obtaining accelerometer data value (EAS, VAS) from at least one accelerometer, said accelerometer data containing information regarding vibration or motion of said automotive vehicle and supplying said accelerometer data to said processing circuitry;
operating the processing circuitry for generating, based on the at least one sensor signal and on the accelerometer data (EAS, VAS), one or more occupancy status signals (CPS), the occupancy status signal (CPS) indicating a property related to said at least one occupiable position,
**characterized in that**
said generating one or more occupancy status signals (CPS) comprises applying, based on said accelerometer data (EAS, VAS), offset removal to said sensor signal to generate a modified signal; and generating said one or more occupancy status signals (CPS) based on the modified signals.

2. The method of claim 1, wherein the one or more occupancy status signals (CPS) comprise
an occupant detection signal, indicating whether or not an occupant is present in the occupiable position,
an occupant classification signal, indicating a classification for an occupant present in the occupiable position, and/or
an occupant vital signs signal, indicating the extent to which vital signs are exhibited in the occupiable position or by an occupant in the occupiable position.

3. A radar sensor system for sensing occupancy status within an automotive vehicle, the system comprising:
an antenna system (Tx) for illuminating at least one occupiable position within the vehicle with an outgoing radar signal;
at least one sensor (Radar Sensor) for receiving at least one sensor signal reflected as a result of the outgoing radar signal, and
a processing circuitry coupled to the at least one sensor (Radar Sensor), the processing circuitry being operable
for obtaining accelerometer data (EAS, VAS) from at least one accelerometer, said accelerometer data containing information regarding vibration or motion of said automotive vehicle, and
for generating, based on the at least one sensor signal and on the accelerometer data (EAS, VAS), one or more occupancy status signals (CPS), the occupancy status signal (CPS) indicating a property related to said at least one occupiable position,
**characterized in that**
said generating one or more occupancy status signals (CPS) comprises applying, based on said accelerometer data (EAS, VAS), offset removal to said sensor signal to generate a modified signal; and generating said one or more occupancy status signals (CPS) based on the modified signals.

4. The radar sensor system according to claim 3, wherein the one or more occupancy status signals (CPS) comprise
an occupant detection signal, indicating whether or not an occupant is present in the occupiable position,
an occupant classification signal, indicating a classification for an occupant present in the occupiable position, and/or
an occupant vital signs signal, indicating the extent to which vital signs are exhibited in the occupiable position or by an occupant in the occupiable position.

5. The radar sensor system according to any one of claims 3 to 4, wherein said at least one accelerometer is a dedicated accelerometer and forms an integral part of said radar sensor.

6. The radar sensor system according to any one of claims 3 to 4, wherein said at least one accelerometer is an accelerometer associated to existing vehicle components, such as an airbag control unit accelerometer.

## Patentansprüche

1. Verfahren zum Erkennen eines Belegungszustands innerhalb eines Kraftfahrzeugs unter Verwendung eines Radarsensorsystems, wobei das Radarsensorsystem ein Antennensystem (Tx), mindestens einen Sensor (Radarsensor) und eine Verarbeitungsschaltung aufweist, wobei das Verfahren folgendes aufweist:
das Anstrahlen mindestens einer belegbaren Position innerhalb des Fahrzeugs mit einem ausgehenden Radarsignal unter Verwendung des Antennensystems (Tx),
das Empfangen mindestens eines Sensorsignals, das auf Grund des ausgehenden Radarsignals reflektiert wird, unter Verwendung von mindestens einem Sensor (Radarsensor),
das Erhalten eines Beschleunigungsmesser-Datenwertes (EAS, VAS) von mindestens einem Beschleunigungsmesser, wobei die Beschleunigungsmesserdaten Informationen über die Vibration oder Bewegung des Kraftfahrzeugs enthalten, und das Zuführen der Beschleunigungsmesserdaten zur Verarbeitungsschaltung;
das Betreiben der Verarbeitungsschaltung zum Erzeugen eines oder mehrerer Belegungszustandssignale (CPS) basierend auf dem mindestens einen Sensorsignal und auf den Beschleunigungsmesserdaten (EAS, VAS), wobei das Belegungszustandssignal (CPS) eine Eigenschaft anzeigt, die sich auf die mindestens eine belegbare Position bezieht,
**dadurch gekennzeichnet, dass**
das Erzeugen eines oder mehrerer Belegungszustandssignale (CPS) das Anlegen einer Offsetentfernung an das Sensorsignal basierend auf den Beschleunigungsmesserdaten (EAS, VAS), um ein modifiziertes Signal zu erzeugen, umfasst; und das Erzeugen des einen oder der mehreren Belegungszustandssignale (CPS) basierend auf den modifizierten Signalen umfasst.

2. Verfahren nach Anspruch 1, wobei das eine oder die mehreren Belegungszustandssignale (CPS) folgendes aufweisen:
ein Insassenerkennungssignal, das anzeigt, ob sich ein Insasse in der belegbaren Position befindet,
ein Insassenklassifizierungssignal, das eine Klassifizierung für einen sich in der belegbaren Position befindenden Insassen anzeigt, und/oder ein Insassen-Lebenszeichensignal, das anzeigt, in welchem Ausmaß Lebenszeichen in der belegbaren Position oder von einem Insassen in der belegbaren Position erkennbar sind.

3. Radarsensorsystem zum Erkennen des Belegungszustands innerhalb eines Kraftfahrzeugs, wobei das System folgendes aufweist:
ein Antennensystem (Tx) zum Anstrahlen mindestens einer belegbaren Position innerhalb des Fahrzeugs mit einem ausgehenden Radarsignal;
mindestens einen Sensor (Radarsensor) zum Empfangen von mindestens einem Sensorsignal, das auf Grund des ausgehenden Radarsignals reflektiert wird, und
eine Verarbeitungsschaltung, die an den mindestens einen Sensor (Radarsensor) gekoppelt ist, wobei die Verarbeitungsschaltung bedienbar ist
zum Erhalten von Beschleunigungsmesserdaten (EAS, VAS) von mindestens einem Beschleunigungsmesser, wobei die Beschleunigungsmesserdaten Informationen über die Vibration oder Bewegung des Kraftfahrzeugs enthalten, und
zum Erzeugen eines oder mehrerer Belegungszustandssignale (CPS) basierend auf dem mindestens einen Sensorsignal und auf den Beschleunigungsmesserdaten (EAS, VAS), wobei das Belegungszustandssignal (CPS) eine Eigenschaft anzeigt, die sich auf die mindestens eine belegbare Position bezieht,
**dadurch gekennzeichnet, dass**
das Erzeugen eines oder mehrerer Belegungszustandssignale (CPS) das Anlegen einer Offsetentfernung an das Sensorsignal basierend auf den Beschleunigungsmesserdaten (EAS, VAS) umfasst, um ein modifiziertes Signal zu erzeugen; und das Erzeugen des einen oder der mehreren Belegungszustandssignale (CPS) basierend auf den modifizierten Signalen umfasst.

4. Radarsensorsystem nach Anspruch 3, wobei das eine oder die mehreren Belegungszustandssignale (CPS) folgendes aufweisen:
ein Insassenerkennungssignal, das anzeigt, ob sich ein Insasse in der belegbaren Position befindet,
ein Insassenklassifizierungssignal, das eine Klassifizierung für einen sich in der belegbaren Position befindenden Insassen anzeigt, und/oder
ein Insassen-Lebenszeichensignal, das anzeigt, in welchem Ausmaß Lebenszeichen in der belegbaren Position oder von einem Insassen in der belegbaren Position erkennbar sind.

5. Radarsensorsystem nach einem der Ansprüche 3 bis 4, wobei der mindestens eine Beschleunigungsmesser ein zugeordneter Beschleunigungsmesser ist und einen integralen Bestandteil des Radarsensors bildet.

6. Radarsensorsystem nach einem der Ansprüche 3 bis 4, wobei der mindestens eine Beschleunigungsmesser ein Beschleunigungsmesser ist, der bestehenden Fahrzeugkomponenten zugeordnet ist, wie einem Beschleunigungsmesser für eine Airbag-Steuereinheit.

## Revendications

1. Procédé de détection de statut d'occupation au sein d'un véhicule automobile utilisant un système de détecteur radar, le système de détecteur radar comprenant un système d'antenne (Tx), au moins un détecteur (détecteur radar) et un ensemble de circuits de traitement, le procédé comprenant
l'éclairage, en utilisant le système d'antenne (Tx), d'au moins une position occupable au sein du véhicule avec un signal radar sortant ;
la réception, en utilisant au moins un détecteur (détecteur radar), d'au moins un signal de détecteur réfléchi comme un résultat du signal radar sortant,
l'obtention d'une valeur de données d'accéléromètre (EAS, VAS) provenant d'au moins un accéléromètre, lesdites données d'accéléromètre contenant des informations se rapportant à une vibration ou un mouvement dudit véhicule automobile et la fourniture desdites données d'accéléromètre audit ensemble de circuits de traitement ; l'utilisation de l'ensemble de circuits de traitement pour générer, sur la base de l'au moins un signal de détecteur et des données d'accéléromètre (EAS, VAS), un ou plusieurs signaux de statut d'occupation (CPS), le signal de statut d'occupation (CPS) indiquant une propriété associée à ladite au moins une position occupable,
**caractérisé en ce que**
ladite génération d'un ou plusieurs signaux de statut d'occupation (CPS) comprend l'application, sur la base desdites données d'accéléromètre (EAS, VAS), d'une élimination de décalage audit signal de détecteur pour générer un signal modifié ; et la génération dudit/desdits un ou plusieurs signaux de statut d'occupation (CPS) sur la base des signaux modifiés.

2. Procédé selon la revendication 1, dans lequel le ou les signaux de statut d'occupation (CPS) comprennent
un signal de détection d'occupant, indiquant si un occupant est ou non présent dans la position occupable,
un signal de classification d'occupant, indiquant une classification pour un occupant présent dans la position occupable, et/ou un signal de signes vitaux d'occupant, indiquant la mesure dans laquelle des signes vitaux sont affichés dans la position occupable ou par un occupant dans la position occupable.

3. Système de détecteur radar pour détecter un statut d'occupation au sein d'un véhicule automobile, le système comprenant :
un système d'antenne (Tx) pour éclairer au moins une position occupable au sein du véhicule avec un signal radar sortant ;
au moins un détecteur (détecteur radar) pour recevoir au moins un signal de détecteur réfléchi comme un résultat du signal radar sortant, et
un ensemble de circuits de traitement couplé à l'au moins un détecteur (détecteur radar), l'ensemble de circuits de traitement étant utilisable
pour obtenir des données d'accéléromètre (EAS, VAS) provenant d'au moins un accéléromètre, lesdites données d'accéléromètre contenant des informations se rapportant à une vibration ou un mouvement dudit véhicule automobile, et
pour générer, sur la base de l'au moins un signal de détecteur et des données d'accéléromètre (EAS, VAS), un ou plusieurs signaux de statut d'occupation (CPS), le signal de statut d'occupation (CPS) indiquant une propriété associée à ladite au moins une position occupable,
**caractérisé en ce que**
ladite génération d'un ou plusieurs signaux de statut d'occupation (CPS) comprend l'application, sur la base desdites données d'accéléromètre (EAS, VAS), d'une élimination de décalage audit signal de détecteur pour générer un signal modifié ; et la génération dudit/desdits un ou plusieurs signaux de statut d'occupation (CPS) sur la base des signaux modifiés.

4. Système de détecteur radar selon la revendication 3, dans lequel le ou les signaux de statut d'occupation (CPS) comprennent
un signal de détection d'occupant, indiquant si un occupant est ou non présent dans la position occupable,
un signal de classification d'occupant, indiquant une classification pour un occupant présent dans la position occupable, et/ou
un signal de signes vitaux d'occupant, indiquant la mesure dans laquelle des signes vitaux sont affichés dans la position occupable ou par un occupant dans la position occupable.

5. Système de détecteur radar selon l'une quelconque des revendications 3 à 4, dans lequel ledit au moins un accéléromètre est un accéléromètre dédié et forme une partie intégrante dudit détecteur radar.

6. Système de détecteur radar selon l'une quelconque des revendications 3 à 4, dans lequel ledit au moins un accéléromètre est un accéléromètre associé à des composants de véhicule existants, tels qu'un accéléromètre d'unité de commande de coussin de sécurité gonflable.
